(19) **Europäisches Patentamt / European Patent Office / Office européen des brevets**

(11) **EP 4 524 222 B1**

(12) **EUROPEAN PATENT SPECIFICATION**

(45) Date of publication and mention
of the grant of the patent:
**31.12.2025 Bulletin 2026/01**

(21) Application number: **23803635.4**

(22) Date of filing: **12.05.2023**

(51) International Patent Classification (IPC):
*C10M 169/02* (2006.01)   *C10N 30/00* (2006.01)
*C10N 40/04* (2006.01)   *C10N 50/10* (2006.01)
*C10M 115/08* (2006.01)   *F16D 3/02* (2006.01)
*F16D 3/16* (2006.01)   *C10N 20/02* (2006.01)
*C10N 30/08* (2006.01)

(52) Cooperative Patent Classification (CPC):
(C-Sets available)
**C10M 169/02; C10M 115/08; F16D 3/02;
F16D 3/16;** C10M 2201/066; C10M 2203/1006;
C10M 2205/0265; C10M 2205/0285;
C10M 2215/1026; C10M 2219/022;
C10M 2219/046; C10M 2219/068; C10N 2020/02;
C10N 2030/08; C10N 2030/76;   (Cont.)

(86) International application number:
**PCT/JP2023/017889**

(87) International publication number:
**WO 2023/219161 (16.11.2023 Gazette 2023/46)**

(54) **GREASE COMPOSITION FOR OUTBOARD CONSTANT VELOCITY JOINTS**

SCHMIERFETTZUSAMMENSETZUNG FÜR AUSSENBORDGLEICHLAUFGELENKE

COMPOSITION DE GRAISSE POUR JOINTS HOMOCINÉTIQUES EXTÉRIEURS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **12.05.2022 JP 2022078604**

(43) Date of publication of application:
**19.03.2025 Bulletin 2025/12**

(73) Proprietor: **Kyodo Yushi Co., Ltd.
Fujisawa-shi, Kanagawa 251-8588 (JP)**

(72) Inventor: **OSAWA Hisayuki
Fujisawa-shi, Kanagawa 251-8588 (JP)**

(74) Representative: **Cabinet Beau de Loménie
103, rue de Grenelle
75340 Paris Cedex 07 (FR)**

(56) References cited:
EP-A1- 2 492 531     WO-A1-2007/060978
WO-A1-2008/007671     WO-A1-2009/136649
WO-A1-2012/090722     JP-A- 2008 069 282
JP-A- 2010 070 592     JP-A- 2010 222 560
JP-A- 2011 063 659     JP-A- 2012 077 283
JP-A- 2014 114 918

(52) Cooperative Patent Classification (CPC): (Cont.)
C10N 2040/046; C10N 2050/10

C-Sets
C10M 2219/046, C10N 2030/52;
C10M 2219/068, C10N 2010/12

## EP 4 524 222 B1

**Description**

Technical Field

The present invention relates to a grease composition for outboard constant velocity joints.

Background Art

In automobiles, front-engine, front-wheel (FF) drive vehicles have become widespread due to lightweight construction aimed at environmental measures for vehicles (CO2 reduction) and securing passenger space, and constant velocity joints (CVJs), which are indispensable for power transmission in FF vehicles, are used.
Since CVJs rotate at an angle, the joint internal parts perform complex rolling and sliding motion. Among CVJs, the outboard side moves the wheels and steers, so that the operating angle may become large. At high operating angles, the rolling and sliding speed and the load between the balls and the transfer surfaces of the inner and outer rings become significantly large, making it difficult to form a lubricating film, and noise may be generated due to stick-slip.
In particular, when a car is left outdoors for a long time during periods of severe cold, the fluidity of the grease in the CVJs deteriorates further when it is completely cooled; when the car is started with a large operating angle, the sound pressure of the generated noise becomes high and the duration becomes long, which is problematic because quietness is impaired.
As CVJ greases aimed at reducing low-temperature starting rotational torque at low temperatures, grease containing a base oil including synthetic oil, a thickener, zinc dithiophosphate, molybdenum dialkyldithiocarbamate sulfide, and zinc dialkyldithiocarbamate (see Patent Literature 1), and grease containing a base oil including 10 to 95% of an ester-based synthetic oil produced from an aliphatic alcohol and an aromatic carboxylic acid and 90 to 5% of a synthetic hydrocarbon oil, a thickener, molybdenum disulfide, molybdenum dialkyldithiocarbamate sulfide, and zinc dithiophosphate (see Patent Literature 2) have been proposed; however, it cannot be said that sufficient studies have been conducted on the effect of suppressing noise due to grease fluidity at low temperatures EP 2 492 531 AI discloses a fixed type constant velocity universal joint which has grease enclosed therein and is provided with an outer joint member having an inner surface in which a plurality of track grooves are formed, an inner joint member having an outer circumferential surface in which a plurality of track grooves are formed, a plurality of balls for transmitting torque provided between the track grooves of the outer joint member and the track grooves of the inner joint member, and a cage for retaining the balls, wherein the grease contains 80% by mass or more of paraffinic mineral oil or a mixture of paraffinic mineral oil and synthetic hydrocarbon oil with respect to the total mass of a lubricant component contained as base oil, the paraffinic mineral oil accounts for 70% by mass or more of the total mass of the lubricant component, and the grease contains 3 to 8% by mass of a thickener with respect to the total mass of the components of the grease, so that the grease prevents abnormal noises from occurring at low temperatures.

Citation List

Patent Literatures

  Patent Literature 1: Japanese Patent Application Publication No. 2009-270058
  Patent Literature 2: Japanese Patent Application Publication No. 2008-163201

Summary of Invention

Problems to be solved by the invention

An object of the present invention is to provide a grease composition for outboard constant velocity joints that is excellent in noise suppression effect at low temperatures.

Means for solution of the problems

The present inventors have found that a grease composition containing a base oil having a specific kinematic viscosity and a urea thickener is excellent in noise suppression performance at low temperatures. That is, the present invention provides the following grease composition for outboard constant velocity joints and a constant velocity joint filled with the same.

1. A grease composition for outboard constant velocity joints, comprising the following components:

(a) a diurea-based thickener; and
(b) a base oil containing a synthetic oil and having a kinematic viscosity at a temperature of -20°C measured according to JIS K 2283 of 3,000 to 20,000 mm$^2$/s.

2. The grease composition according to the above 1, wherein the kinematic viscosity of the base oil (b) at 100°C is 8 to 20 mm$^2$/s.

3. An outboard constant velocity joint filled with the grease composition according to the above 1 or 2.

Advantageous Effects of Invention

The grease composition of the present invention is excellent in noise suppression performance in a low-temperature environment.

Description of Embodiments

(a) Diurea-based thickener

The thickener of the present invention is a diurea-based thickener. As the diurea-based thickener, a diurea compound selected from the group consisting of aliphatic diurea compounds, aromatic diurea compounds, and alicyclic diurea compounds is used. The diurea compound is obtained by reacting a diisocyanate component and a monoamine component. Examples of the diisocyanate include phenylene diisocyanate, diphenylmethane diisocyanate, octadecane diisocyanate, decane diisocyanate, and hexane diisocyanate; examples of the monoamine include octylamine, dodecylamine, hexadecylamine, stearylamine, oleylamine, aniline, p-toluidine, and cyclohexylamine.
A preferred diurea compound for use in the present application is a diurea-based thickener represented by the following formula (1):

$$\text{R1NH-CO-NH-C6H4-p-CH2-C6H4-p-NH-CO-NHR1'} \qquad (1)$$

(wherein R1 and R1' are each independently an octyl group, a dodecyl group, a hexadecyl group, an octadecyl group, a cyclohexyl group, or a phenyl group).
Examples of the diurea-based thickener of formula (1) include aliphatic diurea in which both R1 and R1' are an octyl group, a dodecyl group, a hexadecyl group, or an octadecyl group, alicyclic aliphatic diurea including a diurea compound in which one of R1 and R1' is an octyl group, a dodecyl group, a hexadecyl group, or an octadecyl group and the other is a cyclohexyl group, alicyclic diurea in which both R1 and R1' are a cyclohexyl group, aliphatic aromatic diurea including a diurea compound in which one of R1 and R1' is an octyl group, a dodecyl group, a hexadecyl group, or an octadecyl group and the other is a phenyl group, aromatic diurea in which both R1 and R1' are a phenyl group, and alicyclic aromatic diurea including a diurea compound in which one of R1 and R1' is a cyclohexyl group and the other is a phenyl group.
The thickener is more preferably an alicyclic aromatic diurea thickener because it tends to thicken the grease at the lubricated part, which leads to improved durability. As the alicyclic aromatic diurea thickener, a diurea compound in which one of R1 and R1' in formula (1) is a phenyl group and the other is a cyclohexyl group is preferable. The alicyclic aromatic diurea thickener is a reaction mixture of a diisocyanate and an alicyclic amine and an aromatic amine, so that it also includes a reaction product of a diisocyanate and an alicyclic amine (i.e., a diurea compound in which both R1 and R1' in formula (1) are a cyclohexyl group) and a reaction product of a diisocyanate and an aromatic amine (i.e., a diurea compound in which both R1 and R1' in formula (1) are a phenyl group). From the viewpoint of ensuring the film thickness of the grease composed of the thickener and the base oil, the molar ratio of the cyclohexyl group to the phenyl group in the alicyclic aromatic diurea thickener is preferably 2:8 to 4:6, and more preferably 7:3.
The content of the thickener may be any amount that can adjust the consistency of the grease to 310 to 375, and is specifically preferably 8 to 18% by mass, more preferably 10 to 16% by mass, and even more preferably 11 to 15% by mass, based on the total mass of the composition. In this specification, "consistency" means the 60-stroke worked consistency measured according to JIS K 2220.7.

(b) Base oil

The base oil of the present invention has a kinematic viscosity at -20°C of 3,000 to 20,000 mm$^2$/s. When the

kinematic viscosity at -20°C is 3,000 to 20,000 mm$^2$/s, the fluidity of the grease in the CVJ at low temperatures can be ensured, and noise generated by stick-slip of the lubricated part can be suppressed. The kinematic viscosity at -20°C is preferably 3300 to 17000 mm$^2$/s, and more preferably 3500 to 15000 mm$^2$/s.

As long as the kinematic viscosity at -20°C is in such a range, the type of base oil used in the present invention is not particularly limited. Examples thereof include mineral oils represented by naphthenic and paraffinic oils, synthetic hydrocarbon oils represented by polyalphaolefins and polybutenes, ether-based synthetic oils represented by alkyl diphenyl ethers, silicone oils, fluorinated oils, and other various synthetic oils. The synthetic oil may be a so-called biomass oil produced from biological resources derived from animals and plants. For example, biomass ester oils synthesized from various fatty acids and alcohols derived from vegetable oils, and biomass hydrocarbon oils using vegetable oils such as palm oil, corn oil, and soybean oil can also be used. Among these, synthetic hydrocarbon oils are preferred, and polyalphaolefins are more preferred. The base oil may be used alone or in combination of two or more. From the viewpoint of ensuring low-temperature properties, it is preferable to include a synthetic hydrocarbon oil. From the viewpoint of the balance between ensuring low-temperature properties and cost, a mixture of a synthetic hydrocarbon oil and a mineral oil is particularly preferred. A mixture of a polyalphaolefin and a mineral oil is even more particularly preferred. When the base oil is a mixture of a synthetic oil (e.g., polyalphaolefin) and a mineral oil, the kinematic viscosity of the base oil at -20°C may be within the above range; specifically, the proportion of the synthetic oil in the entire base oil is up to about 30% by mass.

The kinematic viscosity of the base oil of the present invention at 100°C is preferably 8 mm$^2$/s or more, and more preferably 10 mm$^2$/s or more, from the viewpoint of ensuring the oil film thickness of the base oil and preventing metal contact at the lubricated part in the CVJ at high temperatures, thereby improving durability. Since the oil film thickness of the base oil can be ensured at the lubricated part in the CVJ and metal contact can be prevented, thereby improving durability, the higher the kinematic viscosity at 100°C is, the better; however, the viscosity on the low-temperature side increases, so that the kinematic viscosity at 100°C is preferably 20 mm$^2$/s or less, and more preferably 17 mm$^2$/s or less.

The kinematic viscosity of the base oil can be measured according to JIS K 2283.

The viscosity index of the base oil is preferably 120 to 150, and more preferably 130 to 140. Within this range, the change in the kinematic viscosity of the base oil with temperature change is small, so that an increase in the kinematic viscosity at low temperatures due to an increase in the kinematic viscosity at high temperatures can be suppressed. In addition, the viscosity does not become too high at low temperatures. In addition, the base oil having a kinematic viscosity within the above range contains little or no aroma or naphthene components that adsorb to the metal surface in the joint and hinder the operation of each component at low temperatures, which can contribute to suppressing noise generation at low temperatures. The viscosity index of the base oil can be calculated according to JIS K 2283.

The content of the base oil is preferably 70 to 90% by mass, more preferably 73 to 88% by mass, and even more preferably 75 to 85% by mass, based on the total mass of the composition, from the viewpoint of grease fluidity.

The grease composition of the present invention may contain, in addition to the above components, additives usually used in grease compositions, such as extreme pressure additives, antioxidants, and rust inhibitors.

Examples of the additive used in the present invention include molybdenum dialkyldithiocarbamate (MoDTC), molybdenum disulfide, overbased Ca sulfonate, and sulfur-based extreme pressure agents.

The molybdenum dialkyldithiocarbamate is particularly preferably represented by the following formula. MoDTC is preferably represented by the following formula (2):

$$[R^{30}_2N\text{-}CS\text{-}S]_2\text{-}Mo_2OmSn \qquad (2)$$

(wherein R$^{30}$ is a primary or secondary alkyl group having 1 to 4 carbon atoms, preferably a primary or secondary alkyl group having 2 to 4 carbon atoms, m is 0 to 3, n is 1 to 4, and m+n=4).

The content of molybdenum dialkyldithiocarbamate is preferably 1.0 to 4.0% by mass, more preferably 1.5 to 3.5% by mass, and even more preferably 2.0 to 3.0% by mass, based on the total mass of the composition, from the viewpoint of low friction. By including molybdenum dialkyldithiocarbamate in such a range, sufficient low friction can be obtained.

The molybdenum disulfide is generally widely used as a solid lubricant. This compound has a layered lattice structure, is easily sheared into thin layers by sliding motion, prevents metal contact, and has a seizure prevention effect.

The content of molybdenum disulfide is preferably 0.3 to 2.5% by mass, more preferably 0.5 to 2.0% by mass, and even more preferably 0.7 to 1.5% by mass, based on the total mass of the composition, from the viewpoint of seizure resistance. By including molybdenum disulfide in such a range, sufficient low friction can be obtained.

Examples of the overbased Ca sulfonate include overbased calcium salts of alkyl aromatic sulfonic acids, overbased calcium salts of petroleum sulfonic acids, overbased calcium salts of oxidized waxes, and combinations thereof. Among these, overbased calcium salts of alkyl aromatic sulfonic acids are preferred.

The overbased Ca sulfonate is not particularly limited in base number as long as it is overbased, and the base number measured according to JIS K 2501 is, for example, 200 to 500 mg KOH/g, preferably 250 to 450 mg KOH/g, and more preferably 300 to 400 mg KOH/g. If the base number is within the above range, it may be used in combination with a Ca sulfonate other than the overbased Ca sulfonate (e.g., neutral Ca sulfonate).

The content of the overbased Ca sulfonate is preferably 0.3 to 2.5% by mass, more preferably 0.5 to 2.0% by mass, and even more preferably 0.7 to 1.5% by mass, based on the total mass of the composition. By including the overbased Ca sulfonate in such a range, sufficient low friction can be obtained.

Examples of the sulfur-based extreme pressure additive include sulfurized olefins, polysulfides, and sulfurized oils and/or fats. These may be used alone or in combination of two or more.

The sulfurized olefin that can be used in the present invention can be represented by the following general formula (3):

$$R^{10}S\text{-}(Sx\text{-}R^{20}\text{-}Sy)z\text{-}R^{10} \qquad (3)$$

(wherein x is an integer of 0, 1, or 2, y is an integer of 1 to 3, z is an integer of 1 to 10, and $R^{10}$ and $R^{20}$ each independently represent a saturated or unsaturated hydrocarbon group having 4 to 10 carbon atoms).

The sulfurized olefin may be synthesized by a known method or a commercially available product may be used.

The content of the sulfur-based extreme pressure agent is preferably 0.3 to 2.5% by mass, more preferably 0.5 to 2.0% by mass, and even more preferably 0.7 to 1.5% by mass, based on the total mass of the composition. By including the sulfur-based extreme pressure agent in such a range, sufficient low friction can be obtained.

The grease composition of the present invention preferably contains MoDTC, molybdenum disulfide, overbased Ca sulfonate, and a sulfur-based extreme pressure agent. The grease composition of the present invention may further contain, in addition to the above components, other additives usually used in grease compositions, such as other extreme pressure additives, antioxidants, and rust inhibitors. Examples of other extreme pressure additives include phosphate esters. Examples of antioxidants include amine-based and phenol-based antioxidants. Examples of rust inhibitors include sulfonate-based, carboxylic acid-based, and amine-based rust inhibitors. The content of such an optional additive is, for example, 0.1 to 3.0% by mass, preferably 0.3 to 2.0% by mass, based on the total mass of the composition.

Examples

Grease compositions of Examples and Comparative Examples were prepared using the following components. Specifically, 1 mol of 4',4-diphenylmethane diisocyanate and 2 mol of amine (cyclohexylamine:aniline=7:3, molar ratio) were reacted in a base oil, the temperature was raised and then lowered, and the mixture was kneaded with a three-roll mill to obtain a base grease. Additives shown in Table 1 were blended therein, a base oil was further added so that the amount of the thickener became the ratio shown in Table 1, the mixture was dispersed with a three-roll mill, and the worked consistency was adjusted to the value shown in Table 1 to obtain grease compositions of Examples and Comparative Examples. In Table 1, "Ratio %" of mineral oil and synthetic hydrocarbon oil indicates % by mass based on the total amount of the base oil. The numerical values for other component (a), components (b), and additives indicate % by mass of each component based on the total amount of the composition.

<Thickener>

•   Alicyclic aromatic diurea: a reaction product of 1 mol of 4',4-diphenylmethane diisocyanate and 2 mol of amine (cyclohexylamine:aniline=7:3, molar ratio)

<Base oil>

•   Mineral oil (kinematic viscosity: 188.4 mm$^2$/s @ 40°C, 17.41 mm$^2$/s @ 100°C)
•   Synthetic hydrocarbon oil: polyalphaolefin (kinematic viscosity: 14.21 mm$^2$/s @ 40°C, 99.56 mm$^2$/s @ 100°C) or polybutene (kinematic viscosity: 160000 mm$^2$/s @ 40°C, 3700 mm$^2$/s @ 100°C)

In Table 1, the base oil "solidified" at -20°C means that the kinematic viscosity at -20°C cannot be measured.

<Additive>

- MoDTC: molybdenum dialkyldithiocarbamate
- Molybdenum disulfide
- Overbased Ca sulfonate: calcium salt of alkyl aromatic sulfonic acid (base number 300 to 400 mg KOH/g)
- Sulfur-based additive: sulfurized olefin

<Test Method>

- Worked consistency of grease: measured according to JIS K2220.
- Kinematic viscosity of base oil: measured at 100°C, 40°C, and -20°C according to JIS K 2283.
- Actual machine low-temperature noise measurement: a commercially available outboard constant velocity joint was attached to a rotation tester and cooled to -40°C, the joint was operated under the following conditions, and sound collection was started when a predetermined temperature was reached. The test conditions are as follows:

Joint operating angle: 35°
Rotation speed: 200 rpm
Load torque: 600 Nm
Temperature: -35°C to -33°C.

The actual machine low-temperature noise sound pressure was evaluated by measuring the noise level including the background noise of the rotation tester using a digital sound level meter with a built-in sound collection microphone. The results are expressed as a percentage of the difference between the noise level including the noise and the background noise measured in advance before the test.

In addition, the results of listening directly with the ear during the actual machine low-temperature noise measurement are shown according to the following evaluation criteria:

○: No noise was heard.
×: Noise was heard.

Table 1

| | | | Example 1 | Example 2 | Example 3 | Example 4 | Example 5 | Comparative Example 1 | Comparative Example 2 | Comparative Example 3 |
|---|---|---|---|---|---|---|---|---|---|---|
| (a) | Alicyclic Aromatic Diurea | | 14.0 | 14.0 | 14.0 | 14.0 | 14.0 | 13.6 | 13.6 | 13.0 |
| (b) | Base Oil | Total Base Oil Amount | Balance | Balance | Balance | Balance | Balance | Balance | Balance | Balance |
| | | Mineral Oil Ratio % | 30 | 20 | 10 | 0 | 0 | 40 | 50 | 0 |
| | | Synthetic Hydrocarbon Oil Ratio % | 70 | 80 | 90 | 100 | 100 | 60 | 50 | 100 |
| Additive | MoDTC | | 2.5 | 2.5 | 2.5 | 2.5 | 2.5 | 2.5 | 2.5 | 2.5 |
| | Molybdenum Disulfide | | 1.0 | 1.0 | 1.0 | 1.0 | 1.0 | 1.0 | 1.0 | 1.0 |
| | Overbased Ca Sulfonate | | 1.0 | 1.0 | 1.0 | 1.0 | 1.0 | 1.0 | 1.0 | 1.0 |
| | Sulfur-Based Extreme Pressure Agent | | 1.0 | 1.0 | 1.0 | 1.0 | 1.0 | 1.0 | 1.0 | 1.0 |
| Worked Consistency | | | 354 | 353 | 348 | 344 | 358 | 351 | 345 | 341 |
| Kinematic Viscosity of Base Oil | 100°C [mm²/s] | | 14.8 | 14.6 | 14.4 | 14.1 | 10.2 | 15.0 | 15.3 | 22.0 |
| | 40°C [mm²/s] | | 114 | 110 | 105 | 101 | 65.2 | 121 | 129 | 188 |
| | -20°C [mm²/s] | | 12000 | 7420 | 5810 | 5100 | 3720 | Solidified | Solidified | 22000 |
| Viscosity Index of Base Oil | | | 136 | 136 | 141 | 142 | 143 | 128 | 123 | 141 |
| Sound Pressure Measurement of Actual Machine Low-Temperature Noise | Difference from Background Noise [%] | | -2 | +1 | -1 | -1 | ±0 | +6 | +10 | +5 |
| | Whether or Not Noise Was Heard | | O | O | O | O | O | × | × | × |

**Claims**

1. A grease composition for outboard constant velocity joints, comprising the following components:

8

(a) a diurea-based thickener; and
(b) a base oil containing a synthetic oil and having a kinematic viscosity at a temperature of -20°C measured according to JIS K 2283 of 3,000 to 20,000 mm$^2$/s.

2. The grease composition according to claim 1, wherein the kinematic viscosity of the base oil (b) at 100°C is 8 to 20 mm$^2$/s.

3. An outboard constant velocity joint filled with the grease composition according to claim 1 or 2.

**Patentansprüche**

1. Schmierfettzusammensetzung für außenseitige Gleichlaufgelenke, umfassend die folgenden Komponenten:

(a) ein Verdickungsmittel auf Diharnstoffbasis; und
(b) ein Basisöl, das ein synthetisches Öl enthält und eine kinematische Viskosität bei einer Temperatur von -20 °C, gemessen nach JIS K 2283, von 3000 bis 20.000 mm$^2$/s aufweist.

2. Schmierfettzusammensetzung nach Anspruch 1, wobei die kinematische Viskosität des Basisöls (b) bei 100 °C 8 bis 20 mm$^2$/s ist.

3. Außenseitiges Gleichlaufgelenk, das mit der Schmierfettzusammensetzung nach Anspruch 1 oder 2 gefüllt ist.

**Revendications**

1. Composition de graisse pour joints homocinétiques hors-bord, comprenant les composants suivants :

(a) un épaississant à base de diurée ; et
(b) une huile de base contenant une huile synthétique et ayant une viscosité cinématique à une température de -20°C, mesurée conformément à la norme JIS K 2283, de 3 000 à 20 000 mm$^2$/s.

2. Composition de graisse selon la revendication 1, dans laquelle la viscosité cinématique de l'huile de base (b) à 100°C est de 8 à 20 mm$^2$/s.

3. Joint homocinétique côté roue garni de la composition de graisse selon la revendication 1 ou 2.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2492531 A
- JP 2009270058 A
- JP 2008163201 A